# EUROPÄISCHE PATENTSCHRIFT

(11) **EP 2 125 432 B1**
(45) Veröffentlichungstag und Bekanntmachung des Hinweises auf die Patenterteilung: **30.04.2014**
(21) Anmeldenummer: 07818928.9
(22) Anmeldetag: 11.10.2007
(51) Int. Cl.: B60R 7/06

(54) **A BLAUE FACH FÜR EIN KRAFTFAHRZEUG UND VERFAHREN ZU DESSEN HERSTELLUNG**
STORAGE COMPARTMENT FOR A MOTOR VEHICLE AND METHOD FOR THE PRODUCTION THEREOF
COMPARTIMENT DE RANGEMENT POUR UN VÉHICULE ET PROCÉDÉ DE CONSTRUCTION DE CE DERNIER

(30) Priorität: 11.10.2006 DE 102006048197
(43) Veröffentlichungstag der Anmeldung: 02.12.2009
(73) Patentinhaber: International Automotive Components Group GmbH, 47804 Krefeld (DE)
(72) Erfinder: JAROSCHEWITZ, Erhard, 38539 Müden (Aller) (DE); STRIEFLER, Armin, 73207 Plochingen (DE)
(74) Vertreter: Liesegang, Eva
(86) Internationale Anmeldenummer: PCT/EP2007/008857
(87) Internationale Veröffentlichungsnummer: WO 2008/043563

(56) Entgegenhaltungen:
- EP-A- 0 890 424
- DE-A1- 4 038 025
- DE-A1- 10 324 775
- DE-A1- 19 752 786
- DE-A1- 19 960 054
- US-A- 4 379 101
- US-A- 4 529 639
- US-A- 5 810 414

## Beschreibung

Die Erfindung betrifft ein Ablagefach für ein Kraftfahrzeug sowie ein Verfahren zu dessen Herstellung.

Aus der DE 103 24 775 A1 ist ein Ablagefach für ein Fahrzeug bekannt, welches einen Kunststoffgrundkörper und damit verbunden eine Textilschicht aufweist. Die Textilschicht ist an den der Innenseite des Ablagefachs zugewandten Oberflächen des Kunststoffgrundkörpers angeordnet. Zum Fixieren der Textilschicht wird die Textilschicht bei der Erzeugung des Kunststoffgrundkörpers hinterspritzt. Dadurch kommt es zu einer vollflächigen Verbindung zwischen der Textilschicht und dem Kunststoffgrundkörper. Die Textilschicht ist im Inneren des Handschuhfachs angeordnet, um Körperschallübertragung durch im Innenraum des Ablagefachs angeordnete Gegenstände zu reduzieren bzw. zu verhindern.

Die US 5,810,414 A beschreibt ein Ablagefach für ein Kraftfahrzeug mit einem Aufspannrahmen aus Kunststoff und mit wenigstens einer Wand aus einem verformbaren Material, beispielsweise einem textilen Kunststoffmaterial.

Die DE 197 52 786 A1 beschreibt ein Ablagefach für ein Kraftfahrzeug mit einem Innenteil aus weichem Kunststoff und einem Außenteil aus hartem Kunststoff.

Abgesehen davon, dass die Anordnung der Textilschicht im Inneren des Ablagefachs lediglich eine schalldämmende Funktion im Hinblick auf Klappergeräusche der in dem Ablagefach angeordneten Gegenstände hat, ist auch die vollflächige Verbindung zwischen dem Kunststoffgrundkörper und der Textilschicht problematisch. Bei einem Recyclingprozess beispielsweise müssen die einzelnen Materialien voneinander getrennt werden. Da es sich um eine Textilschicht handelt, welche mit dem Kunststoffverbunden ist, hieße das, die Textilschicht während des Recyclingprozesses lösen zu müssen. Dies erfordert einen erheblichen Aufwand und damit verbunden steigen die Recyclingkosten an.

Hinsichtlich der Schalldämpfung ist es problematisch, dass das Ablagefach nicht gegenüber von außen erzeugtem Schall dämpfend wirkt. Dies ist insbesondere bei Einsatz des Ablagefachs als Handschuhfach kritisch, da in diesem Fall ein Hohlraum, der resonant angeregt werden kann, in unmittelbarer Nähe zur Stirnwand zwischen dem Motorraum und der Fahrgastzelle angeordnet ist. Um eine solche Schallanregung bei dem aus der DE 103 24 775 A1 bekannten Ablagefach zu verhindern, ist es daher erforderlich, außerhalb des Handschuhfachs zusätzliche schalldämpfende Maßnahmen vorzusehen. Die Montage dieser zusätzlichen schalldämmenden Matten ist jedoch aufwändig und benötigt zudem einen zusätzlichen Bauraum.

Es ist daher die Aufgabe, ein Ablagefach und ein Verfahren zu dessen Herstellung für ein Kraftfahrzeug zu schaffen, bei dem in das Ablagefach bereits schalldämmende Maßnahmen integriert sind.

Die Aufgabe wird durch ein Ablagefach mit den Merkmalen des Anspruchs 1 und ein Verfahren nach Anspruch 10 gelöst.

Erfindungsgemäß weist das Ablagefach für ein Kraftfahrzeug einen Kunststoffgrundkörper auf, sowie ein textiles Kunststoffmaterial zur Schalldämpfung. Das textile Kunststoffmaterial ist als Flächenelement ausgebildet, wobei das Flächenelement im wesentlichen freitragend ist, also formstabile Eigenschaften aufweist. Ferner ist das Flächenelement lediglich in seinem Randbereich fest mit dem Kunststoffgrundkörper verbunden. Das textile Kunststoffmaterial weist schallabsorbierende Eigenschaften auf, sodass Luftschall durch das textile Kunststoffmaterial wirksam gedämpft wird. Durch den Verzicht auf die vollflächige Verbindung zwischen dem textilen Kunststoffmaterial und dem Kunststoffgrundkörper ist eine einfache Trennung während des Recyclingprozesses möglich. Ein Ablösen muss lediglich im Bereich des Randes des als Flächenelement ausgebildeten textilen Kunststoffmaterials erfolgen.

Gemäß dem erfindungsgemäßen Verfahren zum Herstellen des Ablagefachs wird zunächst ein Flächenelement als Zuschnitt gebildet, wobei dieser Zuschnitt aus dem textilen Kunststoffmaterial in eine geöffnete Spritzgießvorrichtung eingelegt wird. Dort wird der Zuschnitt lagegesichert und bei der geschlossenen Form durch Spritzgießen mit dem Kunststoffgrundkörper randseitig umgeben. Durch das randseitige Umspritzen des Flächenelements wird ein integrales Ablagefach erzeugt, wobei die Flächenelemente aus dem textilen Kunststoffmaterial mit dem Kunststoffgrundkörper nur randseitig fest miteinander verbunden sind und die Flächenelemente zumindest einen Teil der Ablagefachwände bilden.

In den Unteransprüchen sind vorteilhafte Weiterbildungen des erfindungsgemäßen Ablagefach ausgeführt.

Insbesondere ist es vorteilhaft, den Kunststoffgrundkörper in Form eines Gerippes oder Skeletts auszubilden. In diesem Fall werden die in dem Gerippe ausgeschnittenen Flächenbereiche durch als Flächenelemente ausgebildetes textiles Kunststoffmaterial geschlossen. Zwischen den ausgesparten Flächenbereichen des Gerippes werden jeweils einzelne Rippen ausgebildet, welche die Form des Kunststoffgrundkörpers und damit die Form des Ablagefachs festlegen. In das so gebildete Gerippe können auch mehrere Flächenelemente eingesetzt werden. Das Umformen des textilen Kunststoffmaterials kann somit entfallen, insbesondere wenn einzelne Flächenelemente so gewählt werden, dass jeweils nur ebene Flächenbereiche durch das textile Kunststoffmaterial gebildet werden müssen. Das Einlegen von solchen ebenen Flächenelementen in eine geöffnete Spritzgießform ist besonders einfach, insbesondere kann in vorteilhafter Weise ein ebenes Flächenelement ohne die Gefahr des Verrutschens durch Nadeln in der Spritzgießform gesichert werden.

Besonders bevorzugt sind das textile Kunststoffmaterial und der Kunststoffgrundkörper aus demselben Basiskunststoff hergestellt. Dies erleichtert das Recycling erheblich, da auf ein Trennen der beiden Werkstoffe verzichtet werden kann. Dennoch bleiben die bezüglich der Schalldämmung positiven Eigenschaften des lediglich an seinen Randbereichen mit dem Kunststoffgrundkörper verbundenen Flächenelements erhalten.

Gemäß einer weiteren bevorzugten Ausführungsform ist zumindest in einem Bereich das Flächenelement des textilen Kunststoffmaterials zu dem Kunststoffgrundkörper beabstandet angeordnet. Insbesondere wird das Flächenelement auf der Außenseite des Ablagefachs angeordnet. Dabei ist es besonders vorteilhaft, wenn an dem Grundkörper eine oder mehrere Abstandsrippen angeordnet sind, welche als Abstandshalter für das Flächenelement dienen. Eine solche Anordnung hat den Vorteil, dass der Kunststoffgrundkörper auch hinsichtlich seiner mechanischen Stabilität verbessert ist. Das im Vergleich weichere textile Kunststoffmaterial kann somit ausschließlich im Hinblick auf die schallabsorbierenden Eigenschaften optimiert sein. Die Verwendung von Abstandsrippen zwischen dem Kunststoffgrundkörper und dem textilen Kunststoffmaterial stellt dabei sicher, dass eventueller Körperschall, welcher durch in dem Ablagefach angeordnete Gegenstände erzeugt wird, zu dem textilen Kunststoffmaterial lediglich über den durch die Rippen erzeugten Spalt übertragen werden kann und somit dort als Luftschall ankommt, der besonders wirksam durch das textile Kunststoffmaterial gedämpft werden kann.

Bevorzugte Ausführungsbeispiele sind in den Figuren dargestellt und werden in der nachfolgenden Beschreibung näher erläutert. Es zeigen:
- Fig. 1: eine erste perspektivische Darstellung eines ersten Ausführungsbeispiels des erfindungsgemäßen Ablagefachs;
- Fig. 2: eine zweite perspektivische Darstellung des Ausführungsbeispiels der Fig. 1;
- Fig. 3: eine dritte perspektivische Darstellung des Ablagefachs der Figuren 1 und 2;
- Fig. 4: eine Darstellung eines zweiten Ausführungsbeispiels eines erfindungsgemäßen Ablagefachs.

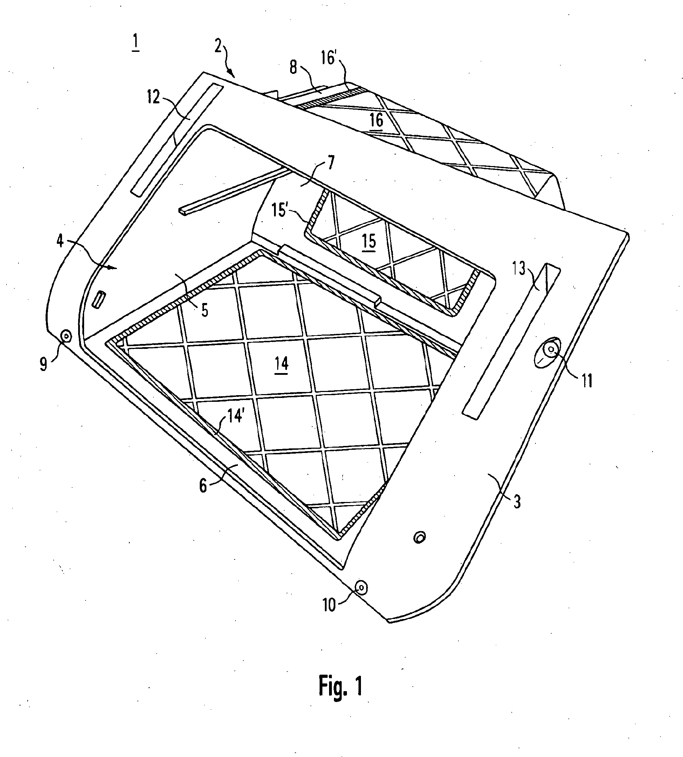

In der Fig. 1 ist ein erfindungsgemäßes Ablagefach gemäß einem ersten Ausführungsbeispiel gezeigt. Das Ablagefach 1 bildet einen Teil eines Armaturenbrettes und wird bei der Montage eines Fahrzeugs in das Armaturenbrett als Modul eingesetzt. Mit dieser Modulbauweise muss eine Vorderfront des Ablagefachs 1 den haptischen und optischen Anforderungen an ein Armaturenbrett eines modernen Kraftfahrzeugs entsprechen. Dieser Forderung kann in einfacher Weise nachgekommen werden, indem das Ablagefach 1 durch einen Deckel verschlossen wird, welcher der deutlicheren Darstellung wegen in der Fig. 1 nicht dargestellt ist.

Das Ablagefach 1 umfasst einen Kunststoffgrundkörper 2, mit einer dem Passagierraum zugewandten Frontfläche 3. In dem dargestellten Ausführungsbeispiel ist das Ablagefach 1 ein Handschuhfach eines Pkw. Ebenso ist jedoch das erfindungsgemäße Ablagefach 1 auch als Türtasche oder für den Bereich einer Mittelkonsole einsetzbar.

Ausgehend von der Frontfläche 3 ergibt sich ein Innenraum 4 des Ablagefachs durch einen Bodenbereich 6, durch einen linken Wandbereich 5, einen rechten Wandbereich, der in der Fig. 1 verdeckt ist, sowie eine Rückwand 7 und einen Deckenbereich 8.

Bei der Schalldämmung des Fahrzeuginnenraums ist es besonders wichtig, die niederfrequenten Schwingungen, die von Insassen als unangenehmes Dröhnen empfunden werden, wirksam zu dämpfen. Hierzu werden insbesondere die großen ebenen Flächen, wie beispielsweise der Bodenbereich 6 oder der Deckenbereich 8 bedämpft.

Zur Fixierung des Ablagefachs 1 dienen mehrere Befestigungselemente 9, 10 und 11, die beispielsweise zur Aufnahme von Schrauben vorgesehen sind.

Weiterhin sind in der Frontfläche 3 Ausnehmungen 12, 13 vorgesehen, die zur Durchführung von Befestigungselementen wie Scharnieren für einen Handschuhfachdeckel dienen. Diese Elemente sind in üblicher Weise ausgeführt, so dass auf eine gesonderte Beschreibung verzichtet werden kann.

Zur Schalldämpfung sind textile Kunststoffmaterialien vorgesehen. Diese textilen Kunststoffmaterialien werden als Flächenelemente in beispielsweise einen Ausschnitt in dem Bodenbereich 6 eingebracht. Im dargestellten Ausführungsbeispiel ist ein erstes rechteckiges Flächenelement 14 in einen entsprechenden Ausschnitt des Bodenbereichs 6 eingebracht und bildet so eine Wand zur Trennung des Innenraums 4 von dem Außenbereich. Der gesamte Bodenbereich 6 wird somit durch das erste rechteckige Flächenelement 14 und den das erste rechteckige Flächenelement 14 umgebenden Bereich des Ablagefachs 1 gebildet. In vergleichbarer Weise ist ein zweites rechteckiges Flächenelement 15 in die Rückwand 7 des Kunststoffgrundkörpers 2 eingesetzt. Ein drittes Flächenelement 16 ist in den Deckenbereich 8 des Kunststoffgrundkörpers 2 eingesetzt.

Der Bodenbereich 6, die Rückwand 7 und der Deckenbereich 8 sind hierzu ausgeschnitten, sodass jeweils zwischen den in dem Bodenbereich 6, der Rückwand 7 und dem Deckenbereich 8 angeordneten Ausschnitten Rippen stehen bleiben. Diese Rippen bilden ein Gerippe, welches den Kunststoffgrundkörper 2 bildet. Durch das Gerippe des Kunststoffgrundkörpers 2 wird die Form des Ablagefachs 1 bestimmt. Die zwischen den Rippen ausgeschnittenen Flächenbereiche werden durch die Flächenelemente 14, 15, 16 verschlossen.

Hierzu wird eine Spritzgießform so gestaltet, dass sie zum Spritzgießen des Gerippes geeignet ist. In diese Spritzgießform werden die Flächenelemente 14, 15 und 16 eingesetzt und beispielsweise mit Hilfe von Nadeln lagerichtig fixiert. In dem anschließenden Spritzgießvorgang wird der Kunststoff in die Spritzgießform eingespritzt und beim Erzeugen des Gerippes die eingelegten Flächenelemente 14, 15 und 16 umspritzt. Beim Umspritzen wird jeweils in Randbereichen 14', 15' bzw. 16' der Flächenelemente 14, 15 oder 16 eine Verbindung zwischen dem Gerippe bzw. dem Kunststoffgrundkörper und den Flächenelementen 14, 15, 16 erzeugt. Es wird folglich ein Ablagefach 1 als integrales Ganzes umfassend einen Kunststoffgrundkörper 2 und zumindest ein Flächenelement 14, 15, 16 gebildet.

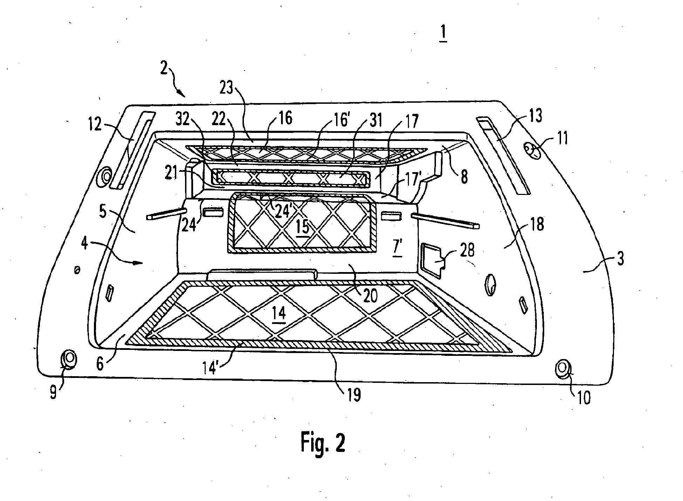

In der Fig. 2 ist eine zweite perspektivische Darstellung des erfindungsgemäßen Ablagefachs 1 dargestellt. Es ist neben den bereits erläuterten Elementen zu erkennen, dass im hinteren Bereich, beim Übergang des Bodenbereichs 6 zu der Rückwand 7 eine Rippe 20 ausgebildet ist. Diese Rippe 20 bildet in dem dargestellten Ausführungsbeispiel eine Quertraverse, welche sich von der linken Seitenwand 5, bis zur rechten Seitenwand 18 erstreckt. Die Rückwand 7 des erfindungsgemäßen Ablagefachs weist in dem dargestellten Beispiel eine Stufe auf und wird damit durch die Rückwandteilflächen 7' und 17 und eine Stufenfläche 17' gebildet. Bei dem Übergang von der Rückwandteilfläche 7 zur Stufenfläche 17' ist eine Kante 24 ausgebildet.

Es ist in dem dargestellten Ausführungsbeispiel gut zu erkennen, dass das Flächenelement 15 ebenfalls einen die Kante 24' ausbildenden Knick aufweist, so dass auch im Bereich des textilen Kunststoffmaterials eine harmonische Formgebung im Bereich der Rückwandteilflächen 7, 17 und 17' entsteht ohne zwei separate Flächenelemente einsetzen zu müssen. Das Flächenelement 15 wird hierzu beim Einlegen in die Spritzgießform in die entsprechende Form gebracht und so in der Spritzgießform fixiert, dass bereits vor dem Spritzgießen die Kante 24' in dem Flächenelement 15 ausgebildet ist.

In dem dargestellten Ausführungsbeispiel der Fig. 2 ist zwischen einem weiteren rechteckigen Flächenelement 31 und dem zweiten rechteckigen Flächenelement 15 eine zweite Rippe 21 ausgebildet. Beim Übergang von der Rückwandteilfläche 17 zu dem Deckenbereich 8 ist eine dritte Rippe 22 ausgebildet. Anstelle der Ausbildung dieser dritten Rippe 22 zwischen dem dritten Flächenelement 16 und einem vierten, rechteckigen Flächenelement 31 ist es auch möglich, ähnlich wie bei dem zweiten rechteckigen Flächenelement 15 die beiden rechteckigen Flächenelemente 16 und 31 miteinander zu verbinden und einteilig mit einer durch Umformen erzeugten Kante auszuführen.

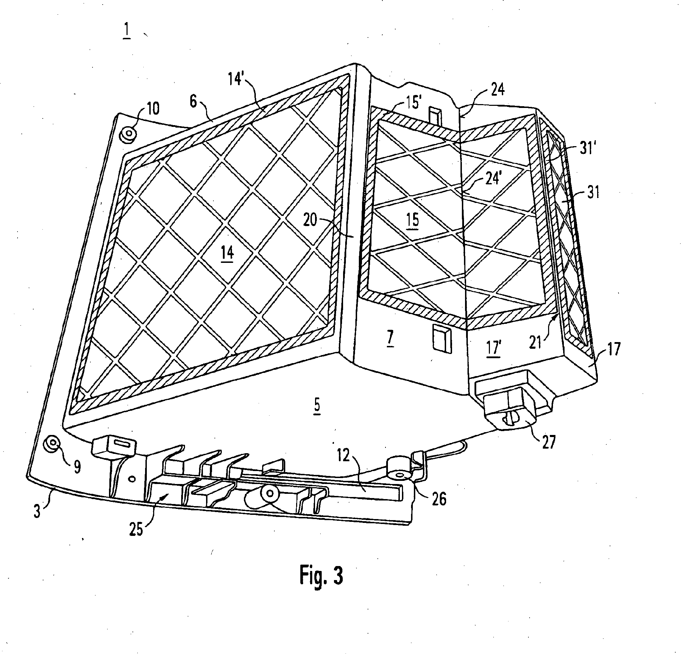

In der Fig. 3 ist das Ablagefach gemäß dem ersten Ausführungsbeispiel von der Rückseite gezeigt. Es ist zu erkennen, dass der Bodenbereich 6 im Bereich des ersten rechteckigen Flächenelements 14 allein durch das erste rechteckige Flächenelement 14 ausgebildet wird. Das rechteckige Flächenelement 14 ist also freitragend und ersetzt somit einen Teil des ersten Bodenbereichs 6. Auf diese Weise ist sowohl bei Schall der im Inneren des Ablagefachs 1, als auch der außerhalb des Ablagefachs 1 entsteht, eine wirksame Schalldämmung gewährleistet. An der Rückseite des Ablagefachs 1 ist im Bereich des Übergangs von der Frontfläche 3 zu der linken Seitenwand 5 eine Versteifungsvorrichtung 25, bestehend aus einer Mehrzahl von unterschiedlich angeordneten Rippen vorgesehen. Ferner ist im Bereich der Öffnung 12 eine Aufnahmevorrichtung 26 gezeigt, welche beispielsweise zur Aufnahme eines Scharniers zur Betätigung eines Handschuhfachdeckels vorgesehen ist. Zum selbsttätigen Öffnen oder selbsttätigen Schließen ist zudem ein Widerlager 27 gezeigt, in das beispielsweise eine Spannvorrichtung oder eine Schließfeder fixiert werden kann.

Die gemäß dem ersten Ausführungsbeispiel gewählte Ausführungsform, bei der Teilflächen der den Innenraum 4 begrenzenden Wände des Ablagefachs durch freitragende Flächenelemente aus dem textilen Kunststoffmaterial ersetzt werden, hat den Vorteil, class im Zusammenwirken mit dem Gerippe aus einem Kunststoffmaterial eine sehr stabile Form erzeugt werden kann. Das Kunststoffmaterial des Gerippes und das Kunststoffmaterial der Flächenelemente 14, 15, 16, 31 wurde dabei vorzugsweise aus dem selben Basiskunststoff erzeugt. Dies hat den Vorteil, dass im Falle eines Recyclings eine Trennung der beiden Materialen voneinander nicht erfolgen muss. Ferner lassen sich die Randbereiche 14', 15', und 31' in besonders einfacher Weise miteinander während des Spritzgießens verbinden.

Gemäß einem zweiten Ausführungsbeispiels, welches in den Figuren nicht separat dargestellt ist, kann das Ablagefach auch vollständig durch ein Formteil aus dem textilen Kunststoffmaterial gebildet werden. Dabei ist es auch möglich, die Befestigungspunkte im Bereich der Frontfläche aus dem textilen Kunststoffmaterial zu erzeugen. Soll in diesem Bereich zur Fixierung des Ablagefachs an einem Armaturenbrett eine höhere Festigkeit erreicht werden, kann beispielsweise auch mit eigentliche Fachteil, der aus dem Bodenbereich 6, den Seitenwänden 5, 18 der Rückwand 7, 17, 17' und dem Deckenbereich 8 gebildet wird, aus dem textilen Kunststoffmaterial ausgebildet sein. Die Frontfläche 3 wird dagegen vorzugsweise wiederum als Kunststoffgrundkörper erzeugt, der mit dem Formteil in bereits beschriebener Weise durch einen Spritzgießprozess mit dem Randbereich verbunden ist.

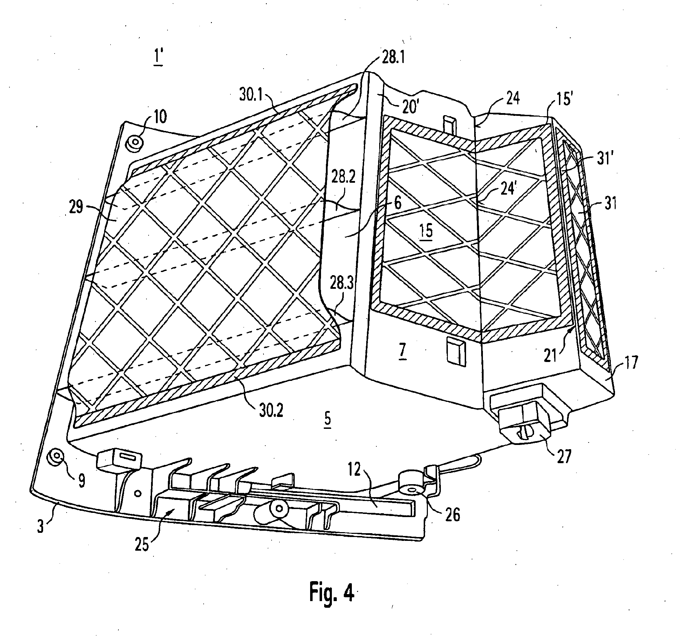

In der Fig. 4 ist ein weiteres Ausführungsbeispiel eines erfindungsgemäßen Ablagefachs 1' dargestellt. Während das zweite rechteckige Flächenelement 15 und das vierte rechteckige Flächenelement 31 denen aus dem ersten Ausführungsbeispiel entsprechen, ersetzt das weitere Flächenelement 29 nicht einen Teil des Bodenbereichs 6. Vielmehr ist in der Nähe der Verbindung des Bodenbereichs 6 zu den Seitenwänden 5, 18 das weitere Flächenelement 29 in seinem Randbereich fest mit dem Bodenbereich 6 verbunden. Auf dem Bodenbereich 6 sind im dargestellten Ausführungsbeispiel drei Abstandsrippen 28.1 bis 28.3 angeordnet, welche sich von der Frontfläche 3 in Richtung auf die Rückwand 7 hinstrecken. Die Abstandsrippen 28.1 bis 28.3 dienen als Abstandshalter und stehen vorzugsweise senkrecht auf dem Bodenbereich 6. Durch die Abstandsrippen 28.1 bis 28.3 ergibt sich zwischen dem weiteren Flächenelement 29 und dem Bodenbereich 6 ein Abstand. Dieser Abstand verhindert, dass die schalldämpfende Wirkung des weiteren Flächenelements 5 durch die unmittelbare Anlage an dem Bodenbereich 6 verschlechtert wird. Werden schwere Gegenstände in das Ablagefach 1' eingelegt, welche bei Überfahren von Schlaglöchern beispielsweise zu einer Körperschallerzeugung in dem Ablagefach 1' führen, so wird der als Luftschall übertragene Schall weiterhin wirksam durch das weitere Flächenelement 29 gedämpft.

Zudem werden auch Geräusche, die außerhalb des Ablagefachs 1' erzeugt werden, wirksam durch das beabstandet angeordnete weitere Flächenelement 29 gedämpft. Solche Geräusche sind beispielsweise die im Motorraum erzeugten und über die Stirnwand in Richtung Fahrgastraum übertragenen Geräusche.

Beide Ausführungsformen, sowohl diejenige mit einem beabstandet angeordneten Flächenelement 29 als auch diejenige mit einem eine Wand oder einen Bodenbereich des Ablagefachs 1 ausbildenden Flächenelement eignen sich, um die Schalldämpfung integriert in das Ablagefach 1, 1' zu realisieren. Durch eine solche integrierte Schalldämpfung kann das Ablagefach als Modul in eine Armaturentafel integriert werden, wobei auf eine zusätzliche Schalldämpfung im Bereich der vorderen Stirnwand verzichtet werden kann oder aber diese in einer reduzierten Ausführung realisiert werden kann. Durch eine solche Reduzierungsmaßnahme seitens der Stirnwandisolation kann Gewicht eingespart werden. Ferner kann das Ablagefach als vorbereitetes Modul eingesetzt werden, wodurch die aufwändige Montage von Dämmmatten im Bereich der Stirnwand überflüssig wird.

Bei sämtlichen Ausführungsbeispielen des erfindungsgemäßen Ablagefachs ist eine Integration von anderen luftschalldämmenden Ausstattungen möglich.

## Patentansprüche

1. Ablagefach für ein Kraftfahrzeug mit einem Kunststoffgrundkörper (2) und einem textilen Kunststoffmaterial zur Schalldämpfung, wobei das textile Kunststoffmaterial als wenigstens ein Flächenelement (14, 15, 16, 31) ausgebildet ist, das im wesentlichen freitragend ist und nur in einem Randbereich (14', 15', 16', 31') fest mit dem Kunststoffgrundkörper (2) verbunden ist.

2. Ablagefach nach Anspruch 1, **dadurch gekennzeichnet, dass** der Kunststoffgrundkörper (2) zumindest teilweise nach Art eines Skeletts oder Gerippes ausgebildet ist und durch das Gerippe definierte Flächenbereiche zwischen das Gerippe bildenden Rippen (20, 21, 22) durch entsprechende Flächenelemente (14, 15, 16, 31) des textilen Kunststoffmaterials geschlossen sind.

3. Ablagefach nach Anspruch 1 oder 2, **dadurch gekennzeichnet, dass** der Kunststoffgrundkörper (2) wenigstens einen Ausschnitt aufweist, in den ein Flächenelement (14, 15, 16, 31) eingesetzt ist.

4. Ablagefach nach einem der vorangehenden Ansprüche, **dadurch gekennzeichnet, dass** der Kunststoffgrundkörper (2) eine Frontfläche (3) aufweist und das textile Kunststoffmaterial ein Formteil bildet, das mit der Frontfläche (3) in seinem Randbereich verbunden ist.

5. Ablagefach nach einem der vorangehenden Ansprüche, **dadurch gekennzeichnet, dass** das textile Kunststoffmaterial und der Kunststoffgrundkörper (2) aus dem gleichen Basiskunststoff gebildet sind.

6. Ablagefach nach einem der vorangehenden Ansprüche, **dadurch gekennzeichnet, dass** wenigstens ein Flächenelement (14, 15, 16, 31) des textilen Kunststoffmaterials zu dem Kunststoffgrundkörper (2) mit Abstand angeordnet ist.

7. Ablagefach nach Anspruch 6, **dadurch gekennzeichnet, dass** an dem Grundkörper (2) eine oder mehrere Abstandsrippen (28.1, 28.2, 28.3) als Abstandshalter für das Flächenelement (29) angeordnet sind.

8. Ablagefach nach Anspruch 6 oder 7, **dadurch gekennzeichnet, dass** das Flächenelement (29) an einer Außenseite des Grundkörpers (2) angeordnet ist.

9. Verfahren zum Herstellen eines Ablagefachs nach einem der Ansprüche 1 bis 8, **dadurch gekennzeichnet, dass** die Flächenelemente (14, 15, 16, 31, 29) bildende Zuschnitte des textilen Kunststoffmaterials in eine geöffnete Form einer Spritzgießvorrichtung eingelegt und lagegesichert werden und bei geschlossener Form durch Spritzgießen mit dem Material des Kunststoffgrundkörpers (2) randseitig umlaufend so umspritzt werden, dass der Kunststoffgrundkörper (2) und die Flächenelemente (14, 15, 16, 31, 29) nach dem Spritzgießvorgang nur randseitig fest miteinander verbunden sind.

10. Verfahren nach Anspruch 9, **dadurch gekennzeichnet, dass** die Flächenelemente (14, 15, 16, 31, 29) in der Spritzgießform durch Nadeln gesichert werden.

## Claims

1. A storage compartment for a motor vehicle, including a plastic base body (2) and a textile plastic material for sound absorption, wherein the textile plastic material is formed as at least one surface element (14, 15, 16, 31), which is substantially self-supporting and is connected securely to the plastic base body (2) at only an edge region (14', 15', 16', 31').

2. The storage compartment according to Claim 1, **characterized in that** the plastic base body (2) is formed at least partially in the manner of a skeleton or framework, and surface regions defined by the framework between ribs (20, 21, 22) forming the framework are closed by corresponding surface elements (14, 15, 16, 31) of the textile plastic material.

3. The storage compartment according to Claim 1 or 2, **characterized in that** the plastic base body (2) has at least one cutout, into which a surface element (14, 15, 16, 31) is inserted.

4. The storage compartment according to one of the preceding claims, **characterized in that** the plastic base body (2) has a front surface (3) and the textile plastic material forms a trim part which is connected with the front surface (3) in its edge region.

5. The storage compartment according to one of the preceding claims, **characterized in that** the textile plastic material and the plastic base body (2) are formed from the same base plastic.

6. The storage compartment according to one of the preceding claims, **characterized in that** at least one surface element (14, 15, 16, 31) of the textile plastic material is arranged at a distance from the plastic base body (2).

7. The storage compartment according to Claim 6, **characterized in that** on the base body (2) one or more spacing ribs (28.1, 28.2, 28.3) are arranged as spacers for the surface element (29).

8. The storage compartment according to Claim 6 or 7, **characterized in that** the surface element (29) is arranged on an outer side of the base body (2).

9. A method for the production of a storage compartment according to one of Claims 1 to 8, **characterized in that** blanks of the textile plastic material forming the surface elements (14, 15, 16, 31, 29) are inserted into an opened mould of an injection moulding device and are secured in place, and with a closed mould are injected around circumferentially on the edge side by injection moulding with the material of the plastic base body (2), so that after the injection moulding process, the plastic base body (2) and the surface elements (14, 15, 16, 31, 29) are connected securely with one another at only the edge side.

10. The method according to Claim 9, **characterized in that** the surface elements (14, 15, 16, 31, 29) are secured in the injection mould by needles.

## Revendications

1. Compartiment de rangement pour véhicule automobile, comportant un corps de base (2) en matière plastique et un matériau plastique textile pour l'insonorisation, dans lequel le matériau plastique textile est réalisé sous la forme d'au moins un élément plan (14, 15, 16, 31) sensiblement à portée libre et relié seulement dans une zone de bordure (14', 15', 16', 31') de manière fixe au corps de base (2) en matière plastique.

2. Compartiment de rangement selon la revendication 1, **caractérisé en ce que** le corps de base (2) en matière plastique est réalisé au moins en partie à la manière d'un squelette ou d'une ossature, et les zones planes définies par l'ossature et formant des membrures (20, 21, 22) entre l'ossature sont obturées par des éléments plans (14, 15, 16, 31) correspondants du matériau plastique textile.

3. Compartiment de rangement selon la revendication 1 ou 2, **caractérisé en ce que** le corps de base (2) en matière plastique comporte au moins une découpe dans laquelle est mis en place un élément plan (14, 15, 16, 31).

4. Compartiment de rangement selon l'une quelconque des revendications précédentes, **caractérisé en ce que** le corps de base (2) en matière plastique comporte une surface frontale (3) et le matériau plastique textile forme un élément formé qui, dans sa zone de bordure, est relié à la surface frontale (3).

5. Compartiment de rangement selon l'une quelconque des revendications précédentes, **caractérisé en ce que** le matériau plastique textile et le corps de base (2) en matière plastique sont réalisés dans la même matière plastique de base.

6. Compartiment de rangement selon l'une quelconque des revendications précédentes, **caractérisé en ce qu'**au moins un élément plan (14, 15, 16, 3 1) du matériau plastique textile est agencé à distance du corps de base (2) en matière plastique.

7. Compartiment de rangement selon la revendication 6, **caractérisé en ce qu'**une ou plusieurs ailettes d'écartement (28.1, 28.2, 28.3) sont disposées sur le corps de base (2) sous la forme d'écarteurs pour l'élément plan (29).

8. Compartiment de rangement selon la revendication 6 ou 7, **caractérisé en ce que** l'élément plan (29) est disposé sur une face extérieure du corps de base (2).

9. Procédé pour la fabrication d'un compartiment de rangement selon l'une quelconque des revendications 1 à 8, **caractérisé en ce que** des découpes du matériau plastique textile, formant les éléments plans (14, 15, 16, 31, 29), sont mises en place et immobilisées dans leur position dans un moule ouvert d'un dispositif de moulage par injection, et lorsque le moule est fermé, leurs bords périphériques sont entourés par le matériau du corps de base (2) en matière plastique injecté pendant le processus de moulage par injection, de telle sorte que, après le processus de moulage par injection, le corps de base (2) en matière plastique et les éléments plans (14, 15, 16, 31, 29) sont fermement reliés entre eux uniquement sur les bords.

10. Procédé selon la revendication 9, **caractérisé en ce que** les éléments plans (14, 15, 16, 31, 29) sont immobilisés par des aiguilles dans le moule du dispositif de moulage par injection.
